# EUROPÄISCHE PATENTSCHRIFT

(11) **EP 1 535 766 B1**
(45) Veröffentlichungstag und Bekanntmachung des Hinweises auf die Patenterteilung: **28.09.2011**
(21) Anmeldenummer: 03104361.5
(22) Anmeldetag: 25.11.2003
(51) Int. Cl.: B60G 3/06, B60G 7/02, B60G 11/23, B60G 11/38

(54) **Radaufhängung für ein Kraftfahrzeug**
Motor vehicle wheel suspension
Suspension de roue de véhicule automobile

(43) Veröffentlichungstag der Anmeldung: 01.06.2005
(73) Patentinhaber: Ford Global Technologies, LLC, A subsidary of Ford Motor Company, Dearborn, MI 48126 (US)
(72) Erfinder: Frantzen, Michael Johannes, 52076 Aachen (DE); David, Wolfgang, Dr., 52074 Aachen (DE); Porschen, Peter, 50170 Kerpen (DE); Simon, Marc, 50735 Köln (DE); Zandbergen, Paul, 6291 BX Vaals (NL)
(74) Vertreter: Drömer, Hans-Carsten

(56) Entgegenhaltungen:
- FR-A- 1 152 493
- JP-A- 8 156 829
- US-A- 6 029 987

## Beschreibung

Die vorliegende Erfindung betrifft eine Radaufhängung für ein Fahrzeug.

Gegenwärtige Radaufhängungen, insbesondere Radaufhängungen für Vorderräder, sind häufig mit Querlenkern ausgestattet und zumeist aus Metall hergestellt. Außerdem weisen sie zumeist Spiral- oder Blattfedern auf, die ebenfalls aus Metall hergestellt sind. Um Fahrgeräusche, Vibrationen sowie das Übertragen von Abrollgeräuschen (Noise, Vibration, Harshness, im Folgenden NVH abgekürzt) in einem akzeptablen Rahmen zu halten, sind die Verbindungen zwischen den Querlenkern der Radaufhängung und dem Fahrzeugrahmen bzw. der Karosserie mit Isolierelementen aus Gummi ausgestattet. Die Radaufhängungen umfassen daher relativ viele Teile und benötigen insbesondere aufgrund der Spiral- bzw. Blattfedern relativ viel Raum.

Ein Aufhängesystem für Antriebsräder, welches keine Blatt- oder Spiralfedern aufweist, ist in der gattungsbildenden EP 0 244 806 B1 beschrieben. In diesem Aufhängesystem kommen statt der Blatt- oder Spiralfedern Torsionsfedern zum Einsatz, die jeweils einen äußeren Hüllenteil, eine inneren Hüllenteil sowie einen zwischen den Hüllenteilen angeordneten Elastomer-Ring umfassen. Über die Torsionsfedern sind ein Tragarm und ein Querlenker für das rechte Fahrzeugrad sowie ein Tragarm und ein Querlenker für das linke Fahrzeugrad mit einem rechten bzw. einem linken Träger des Fahrzeugrahmens derart verbunden, daß sie um eine zum jeweiligen Träger parallel verlaufende Achse schwenkbar sind.

Eine Radaufhängung mit einer Torsionsfeder ist auch in US 6,412,762 B2 beschrieben. Die Trosionsfeder ist dabei aus einer Anzahl von zwischen einer Innenhülle und einer Außenhülle angeordneten Kupplungshülsen, die aus einem Elastomermaterial hergestellt sind, aufgebaut. Sie verbindet den Tragarm einer Radaufhängung derart mit einem Querträger des Fahrzeuges, daß der Tragarm um eine parallel zur Radachse verlaufende Schwenkachse schwenkbar ist.

FR 1 152 493 beschreibt eine gedämpfte Abfederung für Fahrzeuge, in der ein Gehäuse mit einer zylindrischen Bohrung an einem Fahrzeugrahmen angebracht ist. Ein Lenkerdreieck ist mit dem Gehäuse verbunden. Dazu ist an beiden Enden der Bohrung des Gehäuses ein elastisches Gelenk angeordnet, welches einen inneren Ring und einen äußeren Ring sowie einen zwischen den beiden Ringen angeordnete federnde Ringbuchse aus Gummi oder einem ähnlichen elastischen Werkstoff aufweist. Die Außenringe sind in die Enden der Bohrung des Gehäuses eingepresst, wohingegen die Innenringe ohne Spiel auf einen Außenteil eines zapfenförmigen, im Inneren der Bohrung des Gehäuses angeordneten Umdrehungskörpers aufgesetzt sind. Dieser Umdrehungskörper weist zwischen den beiden Außenteilen einen Mittelteil auf, dessen Radius so gewählt ist, dass ein kleiner Ringspalt zwischen seiner Außenseite und der Innenseite der Bohrung verbleibt. Der Ringspalt ist mit einem viskosen Dämpfungsmittel ausgefüllt, welches eine verbesserte Dämpfung bewirken soll.

JP08156829 beschreibt eine Radaufhängung für ein Fahrzeug mit Querlenkern, die an einem Hilfsrahmen angeordnet sind. Zwischen dem Hilfsrahmen und den Querlenkern sind Gummimuffen vorhanden.

US 6,029,987 beschreibt eine Vorderachse für ein Motorfahrzeug, die ein Querelement mit daran angeordneten Armen aufweist. Unterhalb des Querelementes ist eine Blattfeder angeordnet, welche an den Armen anliegt.

Gegenüber dem genannten Stand der Technik besteht die Aufgabe der vorliegenden Erfindung darin, eine alternative Radaufhängung mit Elastomer-Torsionsfedern statt Blatt- oder Spiralfedern für Fahrzeuge zur Verfügung zu stellen.

Diese Aufgabe wird durch eine Radaufhängung nach Anspruch 1 gelöst. Die abhängigen Ansprüche enthalten vorteilhafte Ausgestaltungen der erfindungsgemäßen Radaufhängung.

Eine erfindungsgemäße Radaufhängung für Fahrzeuge umfaßt zwei Querlenker. Jeder Querlenker ist mittels mindestens einer Elastomer-Torsionsfeder, d. h. einem ein Elastomer als federelastisches Material umfassendes Torsionsfederelement, um eine Schwenkachse schwenkbar mit einer Tragstruktur verbundenen. Die Schwenkachse erstreckt sich in der erfindungsgemäßen Radaufhängung in Fahrzeuglängsrichtung, d. h. quer zu den Drehachsen der Räder. In der erfindungsgemäßen Radaufhängung umfaßt die Tragstruktur einen Hilfsrahmen mit zwei einander in Fahrzeugquerrichtung gegenüberliegende Enden. Die beiden Querlenker sind jeweils mittels mindestens einer Elastomer-Torsionsfeder mit einem Ende des Hilfsrahmens verbunden. Dabei sind die Querlenker jeweils über ihre gesamte Längsabmessung über mindestens eine Elastomer-Torsionsfeder mit dem Hilfsrahmen verbunden. Insbesondere kann die Elastomer-Torsionsfeder so lang sein, daß die Querlenker jeweils über ihre gesamte Längsabmessung, d.h. über ihre gesamte Abmessung in Fahrzeuglängsrichtung, mittels einer einzigen Elastomer-Torsionsfeder mit dem Hilfsrahmen verbunden sind. Es können für jeden Querlenker aber auch mehrere Elastomer-Torsionsfedern zwischen der ersten und der zweiten zylindrischen Umfangsfläche in Axialrichtung nebeneinander angeordnet sein, was die Freiheit beim Einstellen der Isolations- und Federeigenschaften der Radaufhängung erhöht.

In der erfindungsgemäßen Radaufhängung ersetzen die Elastomer-Torsionsfedern die Metallfedern und stellen gleichzeitig die Isolationselemente zur Isolation gegenüber Fahrgeräuschen, Vibrationen sowie der Übertragung von Abrollgeräuschen (NVH) dar. Aufgrund der nicht benötigten Metallfedern kann der von der Radaufhängung beanspruchte Platz relativ gering gehalten werden. Außerdem bietet die erfindungsgemäße Radaufhängung die Möglichkeit, den Dämpfer für ein Rad näher am Rad zu positionieren, wodurch die Fahrdynamik des Fahrzeuges verbessert werden kann. Darüber hinaus lassen sich mit der erfindungsgemäßen Radaufhängung aufgrund der Reduktion der Zahl der Bauteile sowohl die Herstellungskosten als auch das Fahrzeuggewicht reduzieren. Durch geeignete Wahl des Verhältnisses von Länge und Dicke der Elastomer-Torsionsfeder, also der axialen und radialen Abmessung, lassen sich die Feder- und Isolationseigenschaften der Elastomer-Torsionsfeder einstellen.

In einer konstruktiven Ausgestaltung der erfindungsgemäßen Radaufhängung sind an den Enden des Hilfsrahmens jeweils mindestens eine um die entsprechende Schwenkachse zentrierte zylindrischen Umfangsfläche, im Folgenden erste zylindrische Umfangsfläche genannt, vorhanden. Außerdem ist jeder Querlenker mit mindestens einer um die entsprechende Schwenkachse zentrierten zylindrischen Umfangsfläche, die im Folgenden zweite zylindrische Umfangsfläche genannt ist, ausgestattet. Entweder die ersten oder die zweiten zylindrischen Umfangsflächen sind dabei als innere Umfangsflächen eines Hohlzylinders ausgebildet, wobei die jeweils anderen zylindrischen Umfangsflächen als äußere Umfangsflächen eines Zylinders ausgebildet und innerhalb der als innere Umfangsflächen eines Hohlzylinders ausgebildeten Umfangsflächen angeordnet sind. Die ersten Umfangflächen sind, mit den zweiten Umfangsflächen mittels mindestens einer der mindestens einen Elastomer-Torsionsfedern miteinander verbunden, und diese mindestens eine Elastomer-Torsionsfeder ist zwischen den Umfangsflächen angeordnet.

Mittels einer oder mehrerer, vorzugsweise an den Unterseiten der beiden Querlenker angreifenden und den Hilfsrahmen überspannenden Blattfeder(n) lassen sich bei der erfindungsgemäßen Radaufhängung insbesondere Feineinstellungen im Rollverhalten des Fahrzeuges vornehmen.

Die erfindungsgemäße Radaufhängung kann insbesondere als Vorderradaufhängung ausgestaltet sein.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Zeichnungen.
- Fig. 1: zeigt ein Ausführungsbeispiel für die erfindungsgemäße Rad- aufhängung.
- Fig. 2: zeigt einen Ausschnitt aus Fig.1.

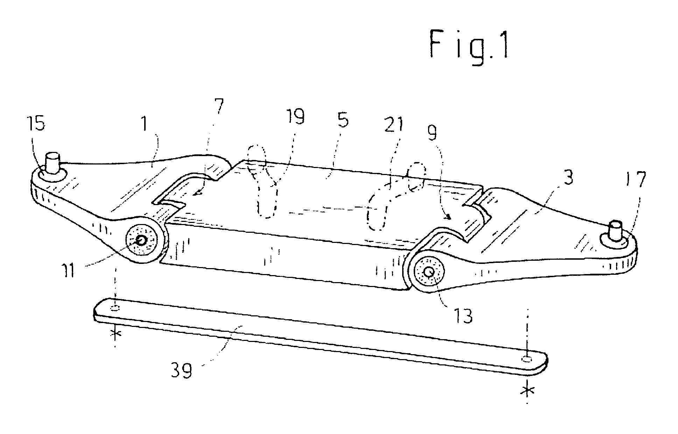

Figur 1 zeigt als ein Ausführungsbeispiel für die erfindungsgemäße Radaufhängung eine Vorderradaufhängung für ein Fahrzeug. Diese umfaßt einen ersten Querlenker 1 für das eine Vorderrad und einen zweiten Querlenker 3 für das andere Vorderrad. Zwischen den beiden Querlenkern 1, 3 ist ein Hilfsrahmen 5, auch Querträger genannt, angeordnet. Der Hilfsrahmen 5 weist in Fahrzeugquerrichtung einander gegenüberliegende Endabschnitte 7, 9 auf, an denen er mit den Querlenkern 1, 3 schwenkbeweglich verbunden ist. Die Schwenkbewegung kann dabei jeweils um eine Schwenkachse 11 bzw. 13, die sich in Fahrzeuglängsrichtung erstreckt, erfolgen.

An ihren dem Hilfsrahmen 5 abgewandten Ende weisen die Querlenker 1, 3 Kugelgelenke 15, 17 auf, die als Schwenklager für eine Radhalterung (nicht dargestellt) dienen. Der Hilfsrahmen 5 ist mittels sog. Tower 19, 21 mit der Karosserie des Fahrzeuges verbunden.

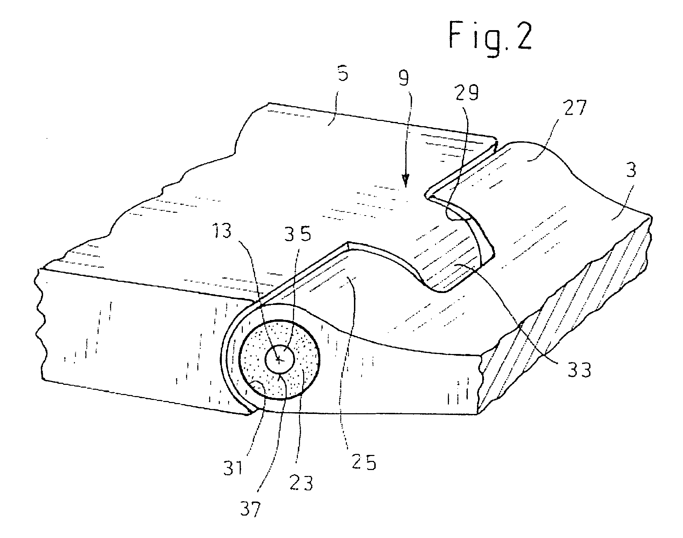

Die Verbindung des Querlenkers 3 mit dem Hilfsrahmen 5 ist in Figur 2 vergrößert dargestellt. Der Querlenker 3 weist an seinem zur Verbindung mit dem Hilfsrahmen 5 vorgesehenen Ende zwei Bereiche 25 und 27 auf, die jeweils mit einer axialen Durchgangsöffnung versehen sind und durch eine Aussparung 29 voneinander getrennt sind. Die axialen Durchgangsöffnungen erstrecken sich dabei in Richtung der Schwenkachse 13 und weisen eine zylinderförmige Innenfläche 31 auf.

In die Aussparung 29 des Querlenkers 3 greift ein Vorsprung 33 des Hilfsrahmens 5 ein, von dem aus sich Achselemente 35 in Richtung der Schwenkachse 13 durch die axialen Durchgangsöffnungen des Querlenkers 3 erstrecken. Die Umfangsflächen der Achselemente 35 bilden den zylindrischen Innenflächen 31 des Querlenkers 3 gegenüberliegende zylindrische Außenflächen 37. Die Innenflächen 31 und die Außenflächen 37 sind über ein zwischen ihnen angeordnetes und mit ihnen vorzugsweise fest verbundenes Elastomermaterial 23 miteinander verbunden. Das Elastomermaterial 23 stellt sowohl eine Torsionsfeder als auch ein Dämpfungselement zum Dämpfen von Fahrgeräuschen, Vibrationen und der Übertragung von Abrollgeräuschen (NVH) dar.

Die Eigenschaften des Elastomermaterials 23 als Torsionsfeder werden dabei durch seinen Schubmodul bestimmt, wohingegen die Dämpfungseigenschaften des Materials im Wesentlichen durch seinen Kompressionsmodul bestimmt werden. Da Schubmodul und Kompressionsmodul in unterschiedlicher Weise von den axialen und radialen Abmessungen des Elastomermaterials 23 abhängen, lassen sich durch geeignetes Einstellen der axialen Länge des Elastomermaterials im Verhältnis zu seiner radialen Abmessung die Feder- und Dämpfungseigenschaften gezielt einstellen.

Insbesondere können zwischen einer Innenfläche 31 und einer Außenfläche 37 mehrere axiale Abschnitte vorhanden sein, in denen jeweils voneinander getrennte Elastomermaterialien eingebracht sind. Dabei kann das Elastomermaterial in den Abschnitten jeweils identisch sein, oder es können für die verschiedenen Abschnitte verschiedene Elastomermaterialien gewählt sein.

Für eine Feinabstimmung des Rollverhaltens des Fahrzeuges kann zusätzlich zu der mindestens einen Torsionsfeder 23 mindestens eine Blattfeder 39 vorgesehen sein, die sich in Fahrzeugquerrichtung unterhalb des Hilfsrahmens 5 erstreckt und mit ihren Enden an den Querlenkern befestigt ist (siehe Figur 1).

## Patentansprüche

1. Radaufhängung für ein Fahrzeug mit zwei Querlenkern (1, 3), die jeweils mittels mindestens einer Elastomer-Torsionsfeder (23) um eine sich in Fahrzeuglängsrichtung erstreckende Schwenkachse (11, 13) schwenkbar mit einer Tragstruktur verbunden sind, wobei die Tragstruktur einen Hilfsrahmen (5) mit zwei einander in Fahrzeugquerrichtung gegenüberliegenden Enden (7, 9) umfaßt, **dadurch gekennzeichnet, daß**
der erste der beiden Querlenker (1; 3) mittels mindestens einer der mindestens einen Elastomer-Torsionsfedern (23) mit dem ersten Ende (7; 9) des Hilfsrahmens (5) verbunden ist und der zweite der beiden Querlenker (3; 1) mittels mindestens einer der mindestens einen Elastomer-Torsionsfedern (23) mit dem zweiten Ende (9; 7) des Hilfsrahmens (5) verbunden ist, wobei jeder der beiden Querlenker (1, 3) über seine gesamte Abmessung in Fahrzeuglängsrichtung über mindestens eine der mindestens einen Elastomer-Torsionsfedern (23) mit dem jeweiligen Ende (7, 9) des Hilfsrahmens (5) verbunden ist.

2. Radaufhängung nach Anspruch 1, bei der die Enden (7, 9) des Hilfsrahmens (5) jeweils mit mindestens einer um die entsprechende Schwenkachse (11, 13) zentrierten ersten zylindrischen Umfangsfläche (37) ausgestattet sind, jeder Querlenker (1, 3) mit mindestens einer um die entsprechende Schwenkachse (11, 13) zentrierten zweiten zylindrischen Umfangsfläche (31) ausgestattet ist, wobei entweder die ersten oder die zweiten zylindrischen Umfangsflächen (31, 37) als innere Umfangsflächen (31) eines Hohlzylinders ausgebildet sind und die jeweils anderen zylindrischen Umfangsflächen als äußere Umfangsflächen (37) eines Zylinders ausgebildet und innerhalb der als innere Umfangsflächen eines Hohlzylinders ausgestalteten Umfangsflächen (31) angeordnet sind, und wobei die ersten Umfangsflächen (37) mit den zweiten Umfangsflächen (31) mittels mindestens einer der mindestens einen Elastomer-Torsionsfedern (23) miteinander verbunden sind und diese mindestens eine Elastomer-Torsionsfeder (23) zwischen den Umfangsflächen (31, 37) angeordnet ist.

3. Radaufhängung nach Anspruch 2,
**dadurch gekennzeichnet, daß**
zwischen einer ersten und einer zweiten zylindrischen Umfangsfläche (31, 37) jeweils mindestens zwei Elastomer-Torsionsfedern (23) in Axialrichtung nebeneinander angeordnet sind.

4. Radaufhängung nach einem der vorangehenden Ansprüche, **dadurch gekennzeichnet, daß**
an den Unterseiten der beiden Querlenker (1, 3) mindestens eine Blattfeder (29) angreift, die den Hilfsrahmen (5) überspannt.

5. Radaufhängung nach einem der vorangehenden Ansprüche, **gekennzeichnet durch** ihre Ausgestaltung als Vorderradaufhängung.

## Claims

1. Wheel suspension for a vehicle, with two transverse links (1, 3) which are each connected by means of a minimum of one elastomer torsion spring (23) to a supporting structure so as to be pivotable about a pivot axis (11, 13) extending in the longitudinal direction of the vehicle, wherein the supporting structure comprises an auxiliary frame (5) having two ends (7, 9) which are opposite each other in the transverse direction of the vehicle, **characterized in that** the first of the two transverse links (1; 3) is connected to the first end (7; 9) of the auxiliary frame (5) by means of at least one of the minimum of one elastomer torsion spring (23), and the second of the two transverse links (3; 1) is connected to the second end (9; 7) of the auxiliary frame (5) by means of at least one of the minimum of one elastomer torsion spring (23), each of the two transverse links (1, 3) being connected over the entire size thereof in the longitudinal direction of the vehicle to the respective end (7, 9) of the auxiliary frame (5) via at least one of the minimum of one elastomer torsion spring (23).

2. Wheel suspension according to Claim 1, in which the ends (7, 9) of the auxiliary frame (5) are each provided with at least one first cylindrical circumferential surface (37) centred about the corresponding pivot axis (11, 13), and each transverse link (1, 3) is provided with at least one second cylindrical circumferential surface (31) centred about the corresponding pivot axis (11, 13), wherein either the first or the second cylindrical circumferential surfaces (31, 37) are designed as inner circumferential surfaces (31) of a hollow cylinder and the other cylindrical circumferential surfaces in each case are designed as outer circumferential surfaces (37) of a cylinder and are arranged within the circumferential surfaces (31) configured as inner circumferential surfaces of a hollow cylinder, and wherein the first circumferential surfaces (37) are connected to the second circumferential surfaces (31) by means of at least one of the minimum of one elastomer torsion spring (23) and said minimum of one elastomer torsion spring (23) is arranged between the circumferential surfaces (31, 37).

3. Wheel suspension according to Claim 2, **characterized in that** at least two elastomer torsion springs (23) are in each case arranged next to each other in the axial direction between a first and a second cylindrical circumferential surface (31, 37).

4. Wheel suspension according to one of the preceding claims, **characterized in that** at least one leaf spring (29) which spans the auxiliary frame (5) acts on the lower sides of the two transverse links (1, 3).

5. Wheel suspension according to one of the preceding claims, **characterized by** the configuration thereof as a front wheel suspension.

## Revendications

1. Suspension de roue pour véhicule comprenant deux bras oscillants latéraux (1, 3), qui sont connectés à une structure de support à chaque fois au moyen d'au moins un ressort de torsion en élastomère (23) de manière à pouvoir pivoter autour d'un axe de pivotement (11, 13) s'étendant dans la direction longitudinale du véhicule, la structure de support comprenant un cadre auxiliaire (5) avec deux extrémités (7, 9) opposées l'une à l'autre dans la direction transversale du véhicule,
**caractérisée en ce que**
le premier des deux bras oscillants latéraux (1 ; 3) est connecté à la première extrémité (7 ; 9) du cadre auxiliaire (5) au moyen d'au moins l'un de l'au moins un ressort de torsion élastomère (23), et le deuxième des deux bras oscillants latéraux (3 ; 1) est connecté à la deuxième extrémité (9 ; 7) du cadre auxiliaire (5) au moyen d'au moins l'un de l'au moins un ressort de torsion élastomère (23), chacun des deux bras oscillants latéraux (1, 3) étant connecté à l'extrémité respective (7, 9) du cadre auxiliaire (5) sur toute sa dimension dans la direction longitudinale du véhicule par le biais d'au moins l'un de l'au moins un ressort de torsion élastomère (23).

2. Suspension de roue selon la revendication 1, dans laquelle les extrémités (7, 9) du cadre auxiliaire (5) sont munies à chaque fois d'au moins une première surface périphérique cylindrique (37) centrée autour de l'axe de pivotement correspondant (11, 13), chaque bras oscillant latéral (1, 3) est muni d'au moins une deuxième surface périphérique cylindrique (31) centrée autour de l'axe de pivotement correspondant (11, 13), soit les premières, soit les deuxièmes, surfaces périphériques cylindriques (31, 37) étant réalisées sous forme de surfaces périphériques intérieures (31) d'un cylindre creux, et les autres surfaces périphériques respectives étant réalisées sous forme de surfaces périphériques extérieures (37) d'un cylindre et étant disposées à l'intérieur des surfaces périphériques (31) configurées sous forme de surfaces périphériques intérieures d'un cylindre creux, et les premières surfaces périphériques (37) étant connectées aux deuxièmes surfaces périphériques (31) au moyen d'au moins l'un de l'au moins un ressort de torsion élastomère (23) et cet au moins un ressort de torsion élastomère (23) étant disposé entre les surfaces périphériques (31, 37).

3. Suspension de roue selon la revendication 2, **caractérisée en ce**
**qu'**entre une première et une deuxième surface périphérique cylindrique (31, 37) sont à chaque fois disposés au moins deux ressorts de torsion élastomères (23) l'un à côté de l'autre dans la direction axiale.

4. Suspension de roue selon l'une quelconque des revendications précédentes,
**caractérisée en ce**
**qu'**au niveau des côtés inférieurs des deux bras oscillants latéraux (1, 3) vient en prise au moins un ressort à lame (29) qui s'étend par-dessus le cadre auxiliaire (5).

5. Suspension de roue selon l'une quelconque des revendications précédentes, **caractérisée par** sa configuration sous forme de suspension de roue avant.
